# EUROPEAN PATENT SPECIFICATION

(11) **EP 0 931 762 B1**
(45) Date of publication and mention of the grant of the patent: **04.05.2005**
(21) Application number: 99100786.5
(22) Date of filing: 18.01.1999
(51) Int. Cl.: C01B 3/32

(54) **Process for the preparation of hydrogen-rich gas**
Verfahren zur Herstellung von wasserstoffreichem Gas
Procédé de préparation d' un gaz riche en hydrogène

(30) Priority: 21.01.1998 US 72074
(43) Date of publication of application: 28.07.1999
(73) Proprietor: Haldor Topsoe A/S, 2800 Lyngby (DK)
(72) Inventor: Topsoe, Haldor F.A., 2950 Vedbaek (DK); Dybkjaer, Ib, 2100 Copenhagen O (DK); Nielsen, Poul Erik Hojlund, 3480 Fredensborg (DK); Voss, Bodil, 2830 Virum (DK)
(74) Representative: Zellentin, Wiger

(56) References cited:
- EP-A- 0 754 649
- EP-A- 0 798 798
- US-A- 5 626 794
- PATENT ABSTRACTS OF JAPAN vol. 011, no. 003 (C-395), 7 January 1987 & JP 61 183101 A (MITSUBISHI HEAVY IND LTD), 15 August 1986

## Description

### BACKGROUND OF THE INVENTION

### Field of the Invention

The present invention relates to the preparation of ammonia synthesis gas from a feedstock comprising dimethyl-ether (DME) by adiabatic catalytic steam reforming in presence of an oxygen and nitrogen containing atmosphere.

### Description of the Related Art

It is known from EP-A-0 761 942 and EP-A-0 754 649 to reform DME to hydrogen and carbon monoxide rich gases in presence of solid acid catalysts. The reactions proceeding during steam reforming of DME are: ${\text{CH}}_{\text{3}} {\text{OCH}}_{\text{3}} {\text{+ H}}_{\text{2}} {\text{O ⇆ 2CH}}_{\text{3}} \text{OH}$${\text{2CH}}_{\text{3}} {\text{OH + 2H}}_{\text{2}} {\text{O ⇆ CO}}_{\text{2}} {\text{+ 6H}}_{\text{2}}$${\text{CO}}_{\text{2}} {\text{+ H}}_{\text{2}} {\text{⇆ CO + H}}_{\text{2}} \text{O}$

The above reactions are endothermic and require heat for reasonable reactions rates. By the process described in the above EP-A-0 761 942 heat is supplied by hot exhaust gas from a gas turbine. It is further known from WO 96/18573 to catalytically hydrolyse DME with steam in heat conducting relationship with the exothermic water-gas shift reaction.

From EP-A-0 798 798 it is also known to produce hydrogen rich gas, starting from methanol, using steam and a supply of oxygen, one (combined selective oxidation and reforming) or two catalysts (a separate selective oxidation catalyst and subsequent reforming catalyst). Means of temperature distribution averaging mentioned include supplying the determined amount of oxygen by a plurality of oxygen supply means arranged along the flow of the reformer unit.

### SUMMARY OF THE INVENTION

It has now been found that DME may adiabatically be steam reformed, when carrying out the reaction in heat conducting relationship with partial oxidation reaction of part of hydrogen formed during steam reforming of DME/MeOH.

Based on the above finding, the present invention provides a process for the production of ammonia synthesis gas from a feedstock comprising dimethyl ether which may further comprise methanol by steam reforming contents of dimethyl ether and methanol in presence of a reforming catalyst to a product gas being rich in hydrogen, wherein necessary heat for the endothermic steam reforming reactions is supplied through oxidation of part of hydrogen in the steam reformed feedstock in heat conducting relationship with the steam reforming reactions.

The above steam reforming reactions and partial oxidation of hydrogen are carried out in one catalyst zone operated adiabatically. It is employed a catalyst with combined activity for the aforementioned DME and MeOH steam reforming reactions and the oxidation of hydrogen. Useful catalysts of the above type are solid acids including zeolitic materials, alumina silicates, silica alumina, alumina and mixtures thereof, combined with a methanol decomposition catalyst, e.g. Cu, or Cu-Zn-alumina in a weight ratio of preferably between 1:5 and 5:1, coated with silica and shell impregnated with one or more noble metals e.g. platinum and/or palladium according to conventional catalyst manufacturing procedure. Such type of catalyst with combined steam reforming and oxidation activity will preferably be used in a fluid bed reactor, wherein a process stream of DME (and methanol), steam, nitrogen and oxygen containing atmosphere will be introduced at the bottom of the reactor.

The oxygen containing atmosphere may be added to the process gas in several steps, whereby each step is performed as described above.

The oxygen and nitrogen containing atmosphere may be added to the process gas in several steps, whereby each step is performed as described above.

The oxygen and nitrogen containing atmosphere for use in the inventive process, may be any atmosphere containing oxygen in an amount sufficient to the oxidation of the required amount of hydrogen in order to provide the necessary heat for the endothermic reforming reactions at a reasonable reaction rate, and further containing nitrogen for the resulting production of ammonia synthesis gas.

The oxygen containing atmosphere may be air, oxygen-enriched air, or oxygen depleted air.

As further an advantage of the above process, carbon dioxide recovered from the effluent stream of the process may be utilized in the preparation of urea by to the known urea process schemes.

### BRIEF DESCRIPTION OF THE DRAWINGS

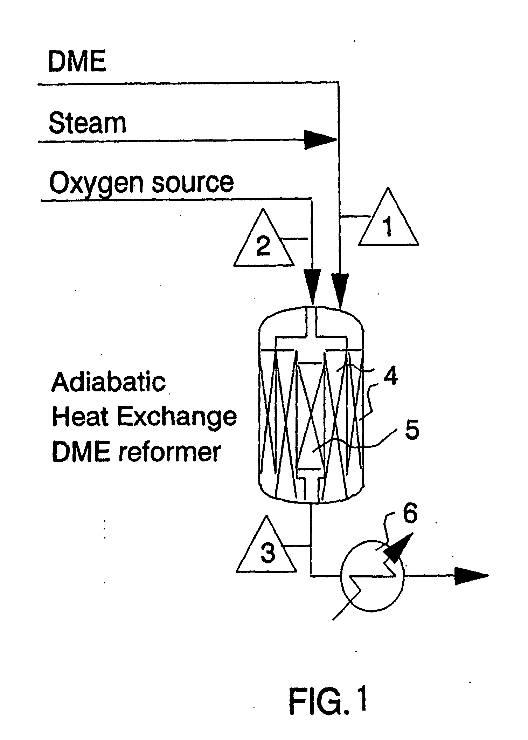

The above features and advantages of the invention will be further apparent from the following description, disclosing in detail the specific embodiment of the invention by reference to the drawing, in which
Fig.1 a process carried out in an adiabatic heat exchange DME reformer.

### DETAILED DESCRIPTION OF THE PREFERRED EMBODIMENT

In the heat exchange DME reformer shown in Fig. 1 a DME and steam containing feed stream 1 is reformed to hydrogen containing process gas with heat supplied by oxidation of part of the hydrogen content in the process gas. The feed gas is in the heat exchange reformer of Fig. 1 reformed in one step by passage through catalyst bed 4 being in indirect heat exchange with oxidation reactions of part of the hydrogen contained in the reacted process gas in oxidation catalyst bed 5. The feed gas may be preheated with heat contained in product gas 3 by heat exchange in heat exchanger 6.

The actual gas composition and process parameters used in the above described process is summarized in the Table below, in which position numbers correspond to the reference numbers in the figure.

**Table 1**

| Fig. 1 | | | |
|---|---|---|---|
| Position | 1 | 2 | 3 |
| Pressure [ato] | 39 | 39 | 37.5 |
| Temperature [°C] | 269 | 173 | 350 |
| Flow rate [kmol/h] | 11047 | 2488 | 17615 |
| Composition | | | |
| O₂ | | 20.86 | |
| H₂ | | | 32.78 |
| H₂O | 89.58 | 0.49 | 43.05 |
| N₂ | | 77.69 | 10.97 |
| CO | | | 0.49 |
| CO₂ | | 0.03 | 12.56 |
| Ar | | 0.94 | 0.13 |
| MeOH DME | 10.42 | | 0.01 |

## Claims

1. A process for the production of ammonia synthesis gas from a feedstock comprising dimethyl ether by feeding the feedstock to a reaction zone and performing endothermic steam reforming of dimethyl ether in presence of a reforming catalyst to produce gas being rich in hydrogen, feeding at least one stream of oxygen and nitrogen containing atmosphere to the reaction zone in a proportion effective for achieving a resulting ammonia synthesis gas and performing exothermic selective oxidation of part of the hydrogen produced by the steam reforming process to provide heat for the endothermic steam reforming reaction and obtaining from the reaction zone the resulting ammonia synthesis gas, the reforming catalyst consisting of a mixture of a solid acid and a methanol reforming catalyst coated with silica and shell impregnated with one or more noble metals.

2. The process of claim 1, wherein the oxygen and nitrogen containing atmosphere consists of air, oxygen depleted or enriched air.

3. The process of claim 2, wherein a carbon dioxide stream recovered from an effluent stream of the process is utilized in a process for the preparation of urea.

## Patentansprüche

1. Verfahren zur Herstellung eines Ammoniaksynthesegases aus einem Dimethylether aufweisenden Ausgangsprodukt durch Einspeisung des Ausgangsproduktes in eine Reaktionszone unter endothermem Dampfreforming von Dimethylether in Gegenwart eines Reformingkatalysators zur Herstellung eines an Wasserstoff-reichen Gases, Einspeisung von mindestens einem Strom von Sauerstoff und Stickstoff aufweisender Atmosphäre in die Reaktionszone in einem Verhältnis, welches für den Erhalt eines resultierenden Ammoniak-Synthesegases wirksam ist und Durchführung einer selektiven exothermen Oxidation eines Teils des durch das Dampfreforming hergestellten Wasserstoffs, um Wärme für die endotherme Dampfreformingreaktion zu schaffen und aus der Reaktionszone das resultierende Ammoniaksynthesegas zu erhalten, wobei der Reformingkatalysator aus einer Mischung von einer festen Säure und einem Methanolreformingkatalysator besteht, der mit Kieselsäure beschichtet ist, und mit einem oder mehreren Edelmetallen in der Hülle imprägniert ist.

2. Verfahren nach Anspruch 1, **dadurch gekennzeichnet, daß** die den Sauerstoff und den Stickstoff enthaltende Atmosphäre aus mit Sauerstoff angereicherter oder abgereicherter Luft besteht.

3. Verfahren nach Anspruch 2, **gekennzeichnet durch** die Verwendung eines Kohlendioxidstromes, der aus einem Abstrom des Prozesses wiedergewonnen wurde in einem Verfahren zur Herstellung von Harnstoff.

## Revendications

1. Procédé pour la production d'ammoniac gazeux de synthèse à partir d'une réserve comprenant du diméthyléther en introduisant la réserve dans une zone de réaction et en procédant à un reformage endothermique à la vapeur de diméthyléther en présence d'un catalyseur de reformage afin de produire du gaz riche en hydrogène, en alimentant au moins un flux d'une atmosphère contenant de l'oxygène et de l'azote dans la zone de réaction en une proportion efficace pour obtenir de l'ammoniac gazeux de synthèse et pour réaliser l'oxydation exothermique sélective d'une partie de l'hydrogène produite par le procédé de reformage à la vapeur de manière à obtenir la chaleur pour la réaction endothermique de reformage à la vapeur et à obtenir de la zone de réaction l'ammoniac gazeux de synthèse, le catalyseur de reformage étant constitué par un mélange d'un acide solide et d'un catalyseur de reformage de méthanol revêtu avec de la silice et la coquille étant imprégnée par un ou plusieurs métaux nobles.

2. Procédé selon la revendication 1, dans lequel l'atmosphère contenant l'oxygène et l'azote est constituée par de l'air, de l'air appauvri ou enrichi en oxygène.

3. Procédé selon la revendication 2, dans lequel un flux de dioxyde de carbone récupéré d'un flux d'effluent du procédé est utilisé dans un procédé pour la préparation d'urée.
